# EUROPÄISCHE PATENTSCHRIFT

(11) **EP 0 812 798 B1**
(45) Veröffentlichungstag und Bekanntmachung des Hinweises auf die Patenterteilung: **02.05.2002**
(21) Anmeldenummer: 97109316.6
(22) Anmeldetag: 09.06.1997
(51) Int. Cl.: B66F 9/20, H01H 3/02, B62D 51/00

(54) **Bedienelement für ein deichselgeführtes Flurförderzeug**
Control element for industrial truck guided by a towbar
Elément de contrôle pour chariot de manutention guidé par timon

(30) Priorität: 14.06.1996 DE 19623793
(43) Veröffentlichungstag der Anmeldung: 17.12.1997
(73) Patentinhaber: Still Wagner GmbH & Co. KG, 72760 Reutlingen (DE)
(72) Erfinder: Prinz, Eugen, 72760 Reutlingen (DE); Nedele, Hartmut, 74555 Metzingen (DE)
(74) Vertreter: Kasseckert, Rainer

(56) Entgegenhaltungen:
- EP-A- 0 371 226
- DE-A- 3 039 346
- DE-A- 4 408 777
- GB-A- 2 045 527
- US-A- 4 444 284
- US-A- 4 453 152

## Beschreibung

Die Erfindung betrifft einen deichselgelenktes Flurförderzeug mit einem an einer Deichsel angeordneten Deichselkopf, welcher mindestens einen Handgriff und mindestens ein Bedienelement zur Erzeugung von Steuersignalen für mindestens ein Antriebsaggregat und/oder mindestens ein Zusatzaggregat des Flurförderzeugs aufweist.

Bei deichselgelenkten Flurförderzeugen, beispielsweise Hochhubwagen, wird generell angestrebt, möglichst alle Bedienelemente zur Betätigung der verschiedenen Funktionen des Flurförderzeugs an dem Deichselkopf, in der Nähe der Handgriffe anzuordnen. Mit den Bedienelementen werden Steuersignale für die jeweilige Funktion des Flurförderzeugs erzeugt, die in einer Steuereinheit weiterverarbeitet und anschließend dem entsprechenden Stellglied zugeführt werden.

Für einige Funktionen des Flurförderzeugs, z.B. für den Fahrantrieb oder die vertikale Bewegung eines Lastaufnahmemittels an einem Hubmast ist es erforderlich, das entsprechende Steuersignal über das Bedienelement feinfühlig und stufenlos einstellen zu können. Aus diesem Grund ist bei deichselgelenkten Flurförderzeugen des Standes der Technik zur Steuerung der vertikalen Bewegung des Lastaufnahmemittels häufig ein Handhebel vorgesehen, der an einem Gehäuseteil des Flurförderzeugs angeordnet ist. Zur Betätigung des Fahrantriebs wird in der Regel ein in der Nähe des Handgriffs angeordneter Drehschalter verwendet, der große Schaltwege aufweist. Aus der DE 44 07 777 A1 ist ein Flurförderzeug bekannt, bei dem der Fahrantrieb und der Hubantrieb mittels am Deichselkopf angeordneten Kippschaltern gesteuert werden können, wobei zumindest der Kippschalter für den Fahrantrieb ein stufenloses Steuersignal erzeugt. Diese bekannten Bedienelemente weisen aufgrund ihrer Anordnung und bauartbedingten Eigenschaften ergonomische Nachteile auf.

Der vorliegenden Erfindung liegt die Aufgabe zugrunde, ein deichselgelenktes Flurförderzeug zur Verfügung zu stellen, bei dem Antriebsaggregate und/oder Zusatzaggregate mit an dem Deichselkopf angeordneten Bedienelementen feinfühlig, stufenlos und ergonomisch vorteilhaft betätigbar sind.

Diese Aufgabe wird erfindungsgemäß dadurch gelöst, daß mindestens eines der Bedienelemente mit einer ein analoges Steuersignal erzeugenden drucksensitiven Widerstandsfolie und mit einem ein zweites Steuersignal erzeugenden Ein-Aus-Schalter in Wirkverbindung steht. Mit der drucksensitiven Widerstandsfolie wird ein analoges Steuersignal erzeugt, welches direkt von der auf die Widerstandsfolie einwirkenden Betätigungskraft abhängig ist. Die von einer Bedienperson in der Regel durch einen Finger erzeugte Betätigungskraft wird direkt oder indirekt über eine Kraftumlenkung auf die Widerstandsfolie geleitet. Die Widerstandsfolie erzeugt dabei ein über die Betätigungskraft stufenlos steuerbares Steuersignal und benötigt dazu praktisch keinen Schaltweg. Es steht somit ein platzsparendes, stufenlos und feinfühlig betätigbares Bedienelement zur Verfügung. Das Bedienelement steht zusätzlich mit einem ein zweites Steuersignal erzeugenden Ein-Aus-Schalter in Wirkverbindung. Das entsprechende Stellglied des Antriebs- oder Zusatzaggregats des Flurförderzeugs wird von der Steuereinheit nur dann betätigt, wenn sowohl der Ein-Aus-Schalter als auch die drucksensitive Folie jeweils Steuersignale liefern, welche eine Betätigung des Bedienelements signalisieren. Fehlfunktionen der drucksensitiven Folie führen somit nicht zur unerwünschter Betätigung des Antriebs- oder Zusatzaggregats. Es ist hierbei auch möglich, als Ein-Aus-Schalter anstelle eines mechanischen Schalters eine zweite drucksensitive Folie vorzusehen.

In einer vorteilhaften Ausgestaltung der Erfindung weist das Bedienelement ein elastisches Zwischenstück zur Übertragung einer auf eine Betätigungsfläche des Bedienelements aufgebrachten Betätigungskraft auf die Widerstandsfolie auf. Das elastische Zwischenstück bewirkt, daß für die Bedienperson beim Betätigen des Bedienelements eine Bewegung der Betätigungsfläche erkennbar ist, wobei die Auslenkung der Betätigungsfläche direkt abhängig von der aufgebrachten Betätigungskraft und somit auch von dem analogen Steuersignal ist.

Mit besonderem Vorteil ist das Zwischenstück aus gummielastischem Material ausgebildet. Aufgrund seiner nichtlinearen Elastizität eignet sich das gummielastische Zwischenstück besonders gut für Anwendungsfälle, bei denen eine Bewegbarkeit der Betätigungsfläche erwünscht ist, die Größe der möglichen Auslenkung aber begrenzt bleiben soll.

Besonders günstig ist es, wenn der Ein-Aus-Schalter durch Bewegen der Betätigungsfläche betätigbar ist. Die druckempfindliche Folie reagiert ausschließlich auf Kräfte, die auf die Oberfläche der Folie einwirken. Demgegenüber reagiert der Ein-Aus-Schalter auf eine Bewegung der Betätigungsfläche. Dadurch können weitere mögliche Fehlerquellen, die zu einer Fehlfunktion des Flurförderzeugs führen könnten, ausgeschlossen werden.

Insbesondere ist es zweckmäßig, wenn das Bedienelement als Tastschalter zur Erzeugung eines analogen Steuersignals für das Anheben und/oder Absenken eines an einem Hubmast vertikal beweglichen Lastaufnahmemittels ausgebildet ist. Für die Steuerung der vertikalen Bewegung des Lastaufnahmemittels ist die Möglichkeit einer feinfühligen Steuerung besonders wichtig, da häufig ein genaues Positionieren des Lastaufnahmemittels erforderlich ist. Das Steuersignal für das Anheben bzw. Absenken kann beispielsweise als Eingangsgröße für eine Impulssteuereinheit eines Antriebsmotors einer Hydraulikpumpe verwendet werden. Eine andere Möglichkeit besteht darin, das Steuersignal für das Anheben bzw. Absenken zum Ansteuern eines in einer Hubhydraulik angeordneten Proportionalventils zu verwenden.

Ebenso günstig ist es, wenn das Bedienelement als Drehschalter zur Erzeugung eines analogen Steuersignals für den Fahrantrieb des Flurförderzeugs ausgebildet ist. Die Drehschalter zur Steuerung des Fahrantriebs stehen bei den Geräten des Standes der Technik mit Potentiometern in Wirkverbindung, welche relativ große Schaltwege benötigen. Durch die Verwendung der drucksensitiven Widerstandsfolie können die Schaltwege erheblich verkürzt und somit ergonomisch ungünstige Stellungen der Hand der Bedienperson vermieden werden.

Weitere Vorteile und Einzelheiten der Erfindung werden anhand der in den schematischen Figuren dargestellten Ausführungsbeispiele näher erläutert. Dabei zeigt
- Figur 1: ein gattungsgemäßes Flurförderzeug,
- Figur 2: einen erfindungsgemäßen Deichselkopf,
- Figur 3: einen erfindungsgemäßen Tastschalter,
- Figur 4: einen erfindungsgemäßen Drehschalter und
- Figur 5: einen Verlauf des analogen Steuersignals über der Betätigungskraft.

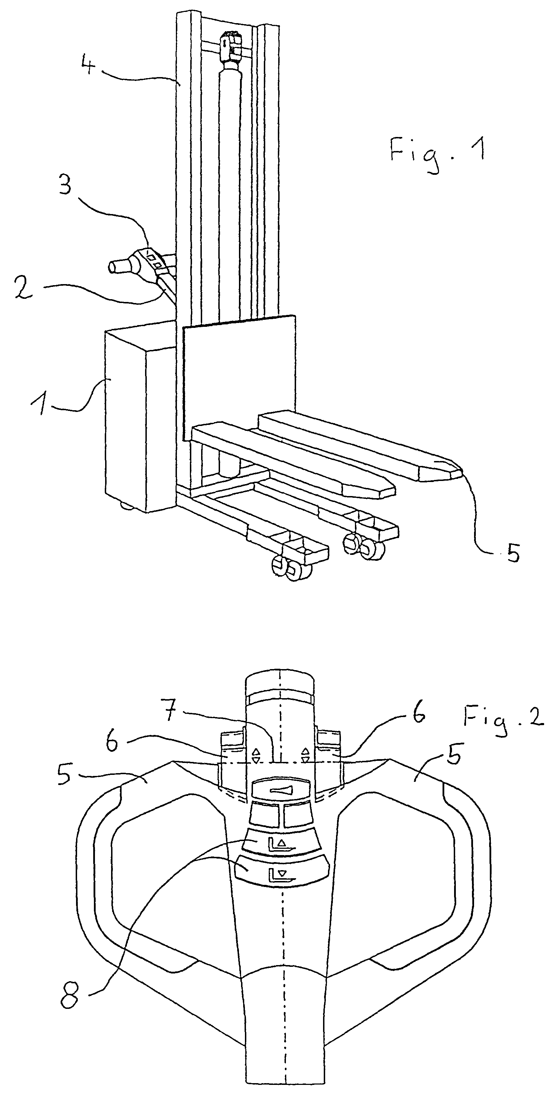

In Figur 1 ist als gattungsgemäßes deichselgeführtes Flurförderzeug ein Hochhubwagen dargestellt. An einem Gehäuseteil 1 des Flurförderzeugs ist eine Deichsel 2 zum Lenken des Flurförderzeugs angeordnet, die einen Deichselkopf 3 mit verschiedenen Bedienelementen aufweist. An einem Hubmast 4 ist ein als Gabel ausgeführtes Lastaufnahmemittel 5 auf- und abbewegbar befestigt.

Figur 2 zeigt einen erfindungsgemäßen Deichselkopf 3, der im Bereich zweier Handgriffe 5 jeweils einen um eine Achse 7 drehbaren Drehschalter 6 aufweist. Mit den Drehschaltern 6 kann der Fahrantrieb des Flurförderzeugs stufenlos gesteuert werden. Mit den ebenfalls am Deichselkopf 3 angeordneten Tastschaltern 8 kann das Anheben bzw. das Absenken des Lastaufnahmemittels 5 gesteuert werden. Auch für diese beiden Funktionen kann über die Tastschalter 8 ein stufenloses Signal für die vertikale Geschwindigkeit des Lastaufnahmemittels 5 vorgegeben werden.

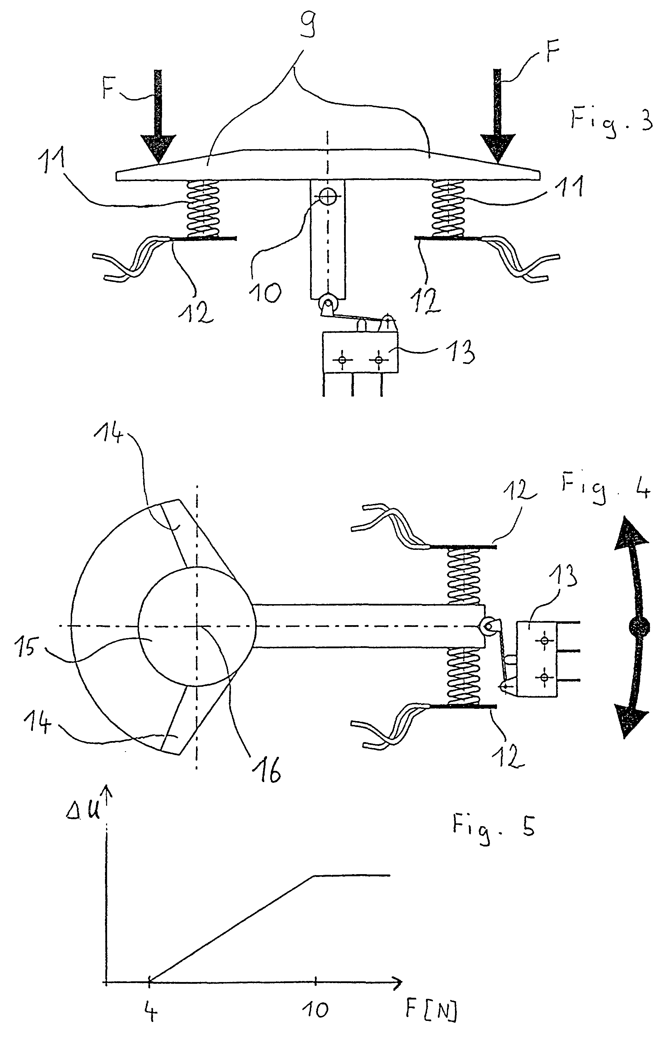

In Figur 3 ist ein erfindungsgemäßer Tastschalter 8 abgebildet. Die Betätigungsfläche 9 des Tastschalters ist schwenkbar um die Achse 10 gelagert. Eine auf die Betätigungsfläche 9 aufgebrachte Betätigungskraft F wird über das elastische Zwischenstück 11 auf die druckempfindliche Widerstandsfolie 12 übertragen. Der innere Widerstand der Widerstandsfolie 12 ändert seinen Wert in Abhängigkeit von der auf die Folie 12 wirkenden Druckkraft. Das Zwischenstück 11 kann z.B. als metallische oder als gummielastische Feder ausgeführt sein.

Die mit der Widerstandsfolie 12 erzeugten Steuersignale können als Eingangsgröße einer Impulssteuerung für einen elektrischen Antriebsmotor einer Hydraulikpumpe verwendet werden. Ebenso ist es möglich, mit dem Steuersignal direkt oder indirekt ein elektrisch ansteuerbares hydraulisches Proportionalventil zu steuern. Diese Möglichkeiten können sowohl für die Funktion "Anheben" wie auch für die Funktion "Absenken" verwendet werden. Es ist dabei auch möglich, die Steuerung der Funktionen "Anheben" bzw. "Absenken" durch die kombinierte, gleichzeitige Ansteuerung einer Impulssteuerung und eines Proportionalventils vorzunehmen.

Mit der Betätigungsfläche 9 ebenfalls in Wirkverbindung steht ein Ein-Aus-Schalter 13, dessen Schaltstellung bei einer Bewegung der Betätigungsfläche 9 geändert wird. Die gewünschte Funktion des Flurförderzeugs wird nur dann aktiviert, wenn die Widerstandsfolie 12 und gleichzeitig der Ein-Aus-Schalter 13 ein entsprechendes Signal erzeugen. In diesem Ausführungsbeispiel kann mit beiden Widerstandsfolien 12 des selben Bedienelements 8 die selbe Funktion des Flurförderzeugs gesteuert werden. Es ist jedoch ebenfalls möglich, beispielsweise die linke Widerstandsfolie 12 mit der Funktion "Anheben" und die rechte Widerstandsfolie des selben Bedienelements mit der Funktion "Absenken" zu belegen.

Das in Figur 4 dargestellte Betätigungselement ist als Drehschalter ausgebildet. Die Berührungsflächen 14 des Drehschalters sind an einem Grundkörper 15 angeordnet, der um die Achse 16 drehbar gelagert ist. Die drucksensitiven Widerstandsfolien 12 stehen in diesem Ausführungsbeispiel derart mit einer Steuereinheit in Wirkverbindung, daß eine Drehung des Drehschalters in die erste Drehrichtung eine Vorwärtsfahrt des Flurförderzeugs und eine Drehung des Drehschalters in die zweite Drehrichtung eine Rückwärtsfahrt des Flurförderzeugs bewirkt.

In Figur 5 ist der Verlauf eines Spannungswerts U des analogen Steuersignals, welches in Abhängigkeit von dem Widerstandswert einer Widerstandsfolie 12 mittels einer Steuereinheit erzeugt wird, über der Betätigungskraft F dargestellt. Daraus ist zu erkennen, daß in diesem Ausführungsbeispiel bis zu einer Betätigungskraft F von 4 Newton eine Veränderung des Widerstandswerts der Widerstandsfolien 12 keine merkbare Veränderung des Spannungswerts U bewirkt. Ab einer Betätigungskraft F von 10 Newton ist die maximale Veränderung des Spannungswerts U erreicht, so daß mit einer weiteren Erhöhung der Betätigungskraft F das Steuersignal nicht mehr beeinflußt werden kann. In dem Bereich zwischen 4 und 10 Newton kann die Geschwindigkeit der jeweiligen Funktion des Flurförderzeugs durch Ändern der Betätigungskraft F stufenlos variiert werden.

## Patentansprüche

1. Deichselgelenktes Flurförderzeug mit einem an einer Deichsel (2) angeordneten Deichselkopf (3), welcher mindestens einen Handgriff (5) und mindestens ein Bedienelement (6, 8) zur Erzeugung von Steuersignalen für mindestens ein Antriebsaggregat und/oder mindestens ein Zusatzaggregat des Flurförderzeugs aufweist, **dadurch gekennzeichnet, daß** mindestens eines der Bedienelemente (6, 8) mit einer ein analoges Steuersignal erzeugenden drucksensitiven Widerstandsfolie (12) und mit einem ein zweites Steuersignal erzeugenden Ein-Aus-Schalter (13) in Wirkverbindung steht.

2. Deichselgelenktes Flurförderzeug nach Anspruch 1, **dadurch gekennzeichnet, daß** das Bedienelement (6, 8) ein elastisches Zwischenstück (11) zur Übertragung von einer auf eine Betätigungsfläche (9, 14) des Bedienelements (6, 8) aufgebrachten Betätigungskraft (F) auf die Widerstandsfolie (12) aufweist.

3. Deichselgelenktes Flurförderzeug nach Anspruch 2, **dadurch gekennzeichnet, daß** das Zwischenstück (11) aus gummielastischem Material ausgebildet ist.

4. Deichselgelenktes Flurförderzeug nach Anspruch 3, **dadurch gekennzeichnet, daß** der Ein-Aus-Schalter(13) durch Bewegen der Betätigungsfläche (9, 14) betätigbar ist.

5. Deichselgelenktes Flurförderzeug nach einem der Ansprüche 1 bis 4, **dadurch gekennzeichnet, daß** das Bedienelement (6, 8) als Tastschalter zur Erzeugung eines analogen Steuersignals für das Anheben und/oder Absenken eines an einem Hubmast (4) vertikal beweglichen Lastaufnahmemittels (5) ausgebildet ist.

6. Deichselgelenktes Flurförderzeug nach einem der Ansprüche 1 bis 5, **dadurch gekennzeichnet, daß** das Bedienelement (6, 8) als Drehschalter zur Erzeugung eines analogen Steuersignals für den Fahrantrieb des Flurförderzeugs ausgebildet ist.

## Claims

1. Tiller-steered industrial truck having a tiller head (3) which is arranged on a tiller (2) and which has at least one handle (5) and at least one operating element (6, 8) for producing control signals for at least one drive unit and/or at least one additional unit belonging to the industrial truck, **characterized in that** at least one of the operating elements (6, 8) is operatively connected to a pressure-sensitive resistance film (12) that generates an analogue control signal and to an on/off switch (13) that generates a second control signal.

2. Tiller-steered industrial truck according to Claim 1, **characterized in that** the operating element (6, 8) has an elastic intermediate piece (11) for transmitting an actuating force (F) applied to an actuating surface (9, 14) of the operating element (6, 8) to the resistance film (12).

3. Tiller-steered industrial truck according to Claim 2, **characterized in that** the intermediate piece (11) is formed of resilient material.

4. Tiller-steered industrial truck according to Claim 3, **characterized in that** the on/off switch (13) can be actuated by moving the actuating surface (9, 14)

5. Tiller-steered industrial truck according to one of Claims 1 to 4, **characterized in that** the operating element (6, 8) is constructed as a push button switch for generating an analogue control signal for raising and/or lowering a load-lifting means (5) moved vertically on a lifting mast (4).

6. Tiller-steered industrial truck according to one of Claims 1 to 5, **characterized in that** the operating element (6, 8) is constructed as a rotary switch for generating an analogue control signal for the drive of the industrial truck.

## Revendications

1. Chariot de manutention articulé par timon comprenant une tête de timon (3) disposée sur un timon (2), qui présente au moins une poignée (5) et au moins un élément de contrôle (6, 8) pour générer des signaux de commande pour au moins une unité de commande et/ou au moins une unité supplémentaire du chariot de manutention, **caractérisé en ce qu'**au moins l'un des éléments de contrôle (6, 8) est en liaison coopérante avec une feuille résistive (12) sensible à la pression générant un signal de commande analogique et avec un contacteur-disjoncteur (13) générant un deuxième signal de commande.

2. Chariot de manutention articulé par timon selon la revendication 1, **caractérisé en ce que** l'élément de contrôle (6, 8) présente une pièce intermédiaire élastique (11) pour le transfert d'une force d'actionnement (F) appliquée sur une face d'actionnement (9, 14) de l'élément de contrôle (6, 8) à la feuille résistive (12).

3. Chariot de manutention articulé par timon selon la revendication 2, **caractérisé en ce que** la pièce intermédiaire (11) est formée en matériau en plastique élastomère.

4. Chariot de manutention articulé par timon selon la revendication 3, **caractérisé en ce que** le contacteur-disjoncteur (13) est actionnable par déplacement de la face d'actionnement (9, 14).

5. Chariot de manutention articulé par timon selon l'une quelconque des revendications 1 à 4, **caractérisé en ce que** l'élément de contrôle (6, 8) est conçu en tant que commutateur à touche pour générer un signal de commande analogique pour soulever et/ou abaisser un moyen de prise de charge (5) mobile verticalement sur un mât de levage (4).

6. Chariot de manutention articulé par timon selon l'une quelconque des revendications 1 à 5, **caractérisé en ce que** l'élément de contrôle (6, 8) est conçu en tant qu'interrupteur rotatif pour générer un signal de commande analogique pour la commande de conduite du chariot de manutention.
